# EUROPÄISCHE PATENTANMELDUNG

(11) **EP 0 538 720 A1**
(43) Veröffentlichungstag der Anmeldung: **28.04.1993**
(21) Anmeldenummer: 92117517.0
(22) Anmeldetag: 14.10.1992
(51) Int. Cl.: B21K 11/02, B21D 53/64, B23P 15/40, A01F 12/40

(54) **Verfahren zum Herstellen einer pendelnd aufgehängten Trennleiste für eine Häckselvorrichtung, Trennleiste und Häckselvorrichtung**

(30) Priorität: 23.10.1991 DE 4134878
(71) Anmelder: DEERE & COMPANY, Moline, Illinois 61265 (US)
(72) Erfinder: Dannigkeit, Helmut, W-6661 Battweiler (DE)
(74) Vertreter: Feldmann, Bernhard

(57) **Zusammenfassung**

2.1. Herkömmlich hergestellte Trennleisten für Häckselvorrichtungen werden im Schneidenbereich mit Zähnen versehen, die in einem aufwendigen Verfahren eingeschliffen werden.

2.2. Es wird vorgeschlagen, die Zähne (30) derartiger Trennleisten mittels eines Schlag- Schmiede- oder Prägewerkzeugs einzudrücken und die gegenüberliegende Seite der Trennleiste (10) plan zu schleifen.

2.3. Derartige Trennleisten werden an Strohhäckslern von Mähdreschern verwendet.

## Beschreibung

Die Erfindung betrifft ein Verfahren zum Herstellen einer pendelnd aufgehängten Trennleiste für eine Häckselvorrichtung, insbesondere für einen Strohhäcksler, die einen schlegelartigen Grundkörper enthält, der seitlich mit Zähnen versehen ist, die mittels eines Schleifvorgangs geschärft werden, sowie eine Trennleiste und eine Häckselvorrichtung.

Aus der DE-OS-36 31 485 ist ein Strohhäcksler bekannt, dessen Rotor mit gezahnten Messern bestückt ist. Die Zähne werden in die Seitenbereiche des Messergrundkörpers eingeschliffen.

Ein solches Herstellungsverfahren ist sehr teuer, weil außer dem Einschleifen der Zähne vier Schleifvorgänge zusätzlich erforderlich sind, um eine scharfe Schneide zu bilden. Um diese Herstellungskosten zu begrenzen, werden dementsprechend auch relativ wenig Zähne eingeschliffen.

Aus der DE-OS-38 23 116 geht ein Schlegel für eine Häckselvorrichtung hervor, in dessen Seitenflächen Zähne eingeschlagen sind.

Diese Schlegel zerreißen das zu bearbeitende Gut, im Gegensatz zu den bekannten Messern, die es in kleine Stücke schneiden.

Die der Erfindung zugrunde liegende Aufgabe wird darin gesehen, ein Herstellungsverfahren vorzuschlagen, das unter geringem Aufwand scharfe und standfeste Trennleisten hervorbringt.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln. Zudem werden vorteilhafte Ausbildungen von Trennleisten gelehrt, die nach diesem Verfahren hergestellt werden und eine Häckselvorrichtung, die mit derartigen Trennleisten bestückt ist.

Mittels dieses Herstellungsverfahrens wird das Material im Bereich der Zähne in einem Schmiede-, Stanz- oder Prägevorgang hoch verdichtet, was eine lange Standzeit hervorbringt. Die Formgebung der Zähne auf der einen Seite wird in einem einzigen Arbeitsgang mit einem einzigen Werkzeug erreicht, wobei die technisch sinnvoll höchste Zahl an Zähnen eingearbeitet werden kann, ohne daß hierdurch die Kosten des Arbeitsganges steigen würden. Schließlich kann ebenfalls in einem einzigen weiteren Arbeitsgang die gegenüberliegende Seite plan geschliffen werden, so daß die Zähne sowohl eine gleichmäßige Größe als auch eine hohe Schärfe erhalten. Die Schleifvorrichtung kann von sehr einfacher Bauart sein, weil Führungen zum Erreichen eines Wellenschliffs, wie beim Stand der Technik, nicht erforderlich sind.

Mit einer nur unbedeutenden Erhöhung der Fertigungskosten kann die Außenkante der Zähne, also die Schneide, in der Mitte zwischen beiden Seiten angeschliffen werden, wenn die Schliffebene mit Bezug auf die Seiten entsprechend stark geneigt wird. Dies bedeutet jedoch nicht, daß nunmehr zwei Arbeitsgänge zum Schleifen erforderlich wären; vielmehr kann ein derartiger Schliff in einem Arbeitsgang mit zwei entsprechend geneigten und gemeinsam geführten Schleifscheiben angebracht werden.

Dieses Fertigungsverfahren bedeutet keinerlei Einschränkung in der Gestaltung der Trennleisten; vielmehr sind alle bekannten Gestaltungen der Schneiden an den Seitenkanten und der Stirnkante möglich. Desgleichen können die Zähne unter einem beliebigen Winkel zu der Längsachse des Grundkörpers eingeprägt werden, wodurch die Schneidwirkung und die Standzeit variiert werden können.

Schließlich erlaubt die kostengünstige und vielfältige Herstellung derartiger Trennleisten, eine Häckselvorrichtung optimal mit Trennleisten, erforderlichenfalls mit unterschiedlicher Gestaltung, zu bestücken.

In der Zeichnung sind nachfolgend näher beschriebene Ausführungsbeispiele der Erfindung dargestellt. Es zeigt:
- Fig. 1: eine nach dem erfindungsgemäßen Verfahren hergestellte Trennleiste in einer ersten Ausführungsform und in Draufsicht,
- Fig. 2: die Trennleiste aus Figur 1 in Vorderansicht mit einem einseitigen Schliff,
- Fig. 3: die Trennleiste aus Figur 1 in Vorderansicht mit einem mittigen Schliff,
- Fig. 4: eine nach dem erfindungsgemäßen Verfahren hergestellte Trennleiste in einer zweiten Ausführungsform und in Draufsicht und
- Fig. 5: eine nach dem erfindungsgemäßen Verfahren hergestellte Trennleiste in einer dritten Ausführungsform und in Draufsicht.

In der Zeichnung gezeigte Trennleisten 10 setzen sich jeweils aus einem Grundkörper 12, Seitenschneidenbereichen 14l und 14r und einem Stirnschneidenbereich 16 zusammen.

Die Trennleiste 10 ist zur Verwendung in einer nicht gezeigten Häckselvorrichtung bestimmt und wird demgemäß überwiegend an Strohhäckslern von Mähdreschern eingesetzt. Eine weitere Verwendung findet sich an Gartenabfallhäckslern, Schrotern, Maishäckslern und Industriehäckslern. Herkömmlicherweise wird eine größere Anzahl von Trennleisten 10 pendelnd auf einem schnell drehenden Rotor befestigt, die mit weiteren gleichen oder ähnlichen als Gegenschneide wirkenden Trennleisten zusammenwirken.

Der Grundkörper 12 ist aus einer Blechleiste gebildet, die aus einer Blechplatte ausgestanzt oder von einem Stahlband abgeschlagen wird. In dem in der Zeichnung links gelegenen Endbereich ist zentrisch eine Bohrung 18 eingestanzt oder gebohrt, die der Verbindung der Trennleiste 10 mit dem Rotor oder dem Stator der Häckselvorrichtung und der Aufnahme einer Schraube, eines Bolzens oder einer Stange dient, wie dies bekannt ist. In der Draufsicht weist der Grundkörper 12 eine im wesentlichen rechteckige Form mit einer abgerundeten Stirnfläche 20, einer eckigen Stirnfläche 22, einer ersten oberen Seite 24, einer zweiten unteren Seite 26, einer linken Seitenfläche 281 und einer rechten Seitenfläche 28r auf. Die eckige Stirnfläche 22 verläuft bei diesem Ausführungsbeispiel zu den jeweiligen Seitenflächen 28l und 28r unter einem Winkel von 90°.

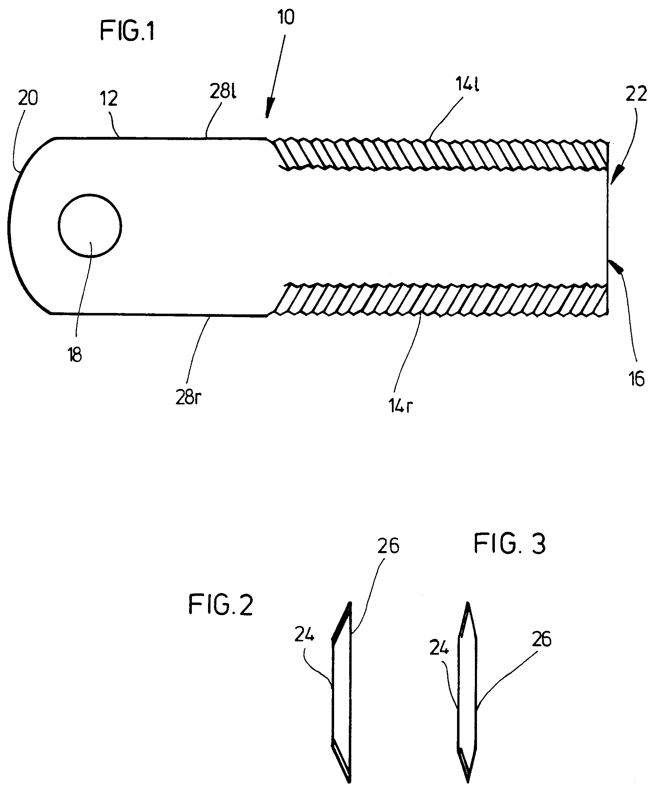

Der linke und der rechte Seitenschneidenbereich 14l und 14r erstrecken sich jeweils über ungefähr die Hälfte der Länge des Grundkörpers 12 auf der ersten Seite 24 und nehmen jeweils ca. 10 bis 15 % von dessen Breite ein. Die Seitenschneidenbereiche 14l und 14r sind bei allen Trennleisten 10 der Figuren 1, 4 und 5 gleich groß und gleich angeordnet. In den Seitenschneidenbereichen 14l und 14r, sowie gegebenenfalls in dem Stirnschneidenbereich 16 sind Zähne 30 eingeprägt, deren Außenkanten in einer gezackten Schneide auslaufen. Eine über die Oberseiten der Zähne 30 verlaufende Ebene verläuft unter einem spitzen Winkel oder einem Winkel von 45° zu der Fläche der ersten Seite 24.

Der Stirnschneidenbereich 16 erstreckt sich an der eckigen Stirnfläche 24 über die gesamte Breite des Grundkörpers 12 und ist so breit wie jeder der Seitenschneidenbereiche 14l, 14r.

Die Zähne 30, durch deren Anordnung sich die Ausführungen der Trennleisten 10 in den Figuren 1, 4 und 5 unterscheiden, ergeben sich durch in die Seiten- bzw. Stirnschneidenbereiche 14l, 14r bzw. 16 mittels eines Schlag-, Schmiede- oder Prägewerkzeugs eingedrückte feine Täler, zwischen denen Berge bestehen bleiben. Aufgrund der mit Bezug auf die Oberfläche der ersten und zweiten Seite 24, 26 geneigten Ausbildung der Zähne 30 enden die Täler im Außenbereich früher als die Berge, so daß sich die gezackte Schneide ergibt. Das Schlag-, Schmiede- oder Prägewerkzeug kann so ausgebildet werden, daß es lediglich die Zähne 30 anformt, oder auch so, daß es zugleich den Grundkörper 12 aus der oben erwähnten Blechplatte oder dem Stahlband möglicherweise zusammen mit der Bohrung 18 herausstanzt.

Nach dem einfachen oder kombinierten Stanzvorgang, der zu einer etwas unebenen zweiten Seite 26 führt, wird der Grundkörper 12 an dieser Unterseite plan geschliffen, so daß die Kontur der Zähne 30 noch scharfkantiger wird. Bei der Ausführung nach Figur 2 verläuft die Schliffebene parallel zu der Ebene der ersten Seite 24, so daß die Schneide einseitig, nämlich in diesem Fall an der zweiten Seite 26 entsteht. Gemäß der Ausführung nach Figur 3 ist die Schneide mittig zwischen der ersten Seite 24 und der zweiten Seite 26 angeformt, indem die Schliffebene mit einer Neigung zu der Ebene der zweiten Seite 26 angelegt wird.

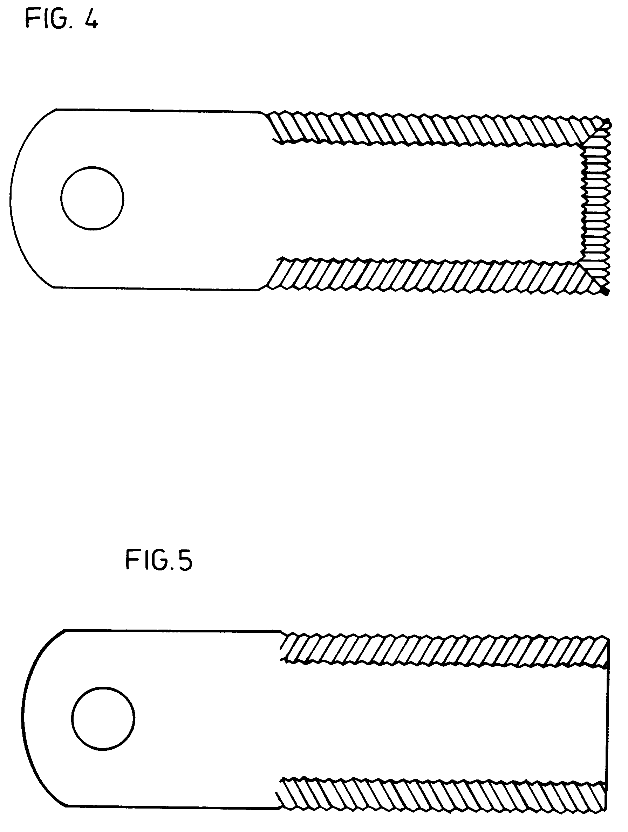

Die Ausführungen nach den Figuren 1, 4, und 5 unterscheiden sich lediglich in der Anordnung der darin enthaltenen Zähne 30. So verläuft nach Figur 1 die Profilierung der Zähne 30 unter einem stumpfen Winkel und nach Figur 5 unter einem spitzen Winkel zu der betreffenden Seitenfläche 28l bzw. 28r, wenn man jeweils denselben Bezugspunkt wählt, d. h. in dem einen Fall weisen sie zu der Bohrung 18 hin, in dem anderen Fall von dieser weg. Zusätzlich ist in dem Ausführungsbeispiel nach Figur 4 an der eckigen Stirnfläche 22 ein Stirnschneidenbereich 16 vorgesehen, so daß die Trennleiste 10 an insgesamt drei Seiten schneidet. Es ist jedoch für den Schleifvorgang vollkommen belanglos, an wievielen Kantenbereichen und in welcher Richtung Zähne 30 vorgesehen sind - es ist jeweils nur ein Schleifvorgang an der Unterseite 26 erforderlich.

## Patentansprüche

1. Verfahren zum Herstellen einer pendelnd aufgehängten Trennleiste (10) für eine Häckselvorrichtung, insbesondere für einen Strohhäcksler, die einen schlegelartigen Grundkörper (12) enthält, der seitlich mit Zähnen (30) versehen ist, die mittels eines Schleifvorgangs geschärft werden, dadurch gekennzeichnet, daß in einem ersten Arbeitsgang auf einer ersten Seite des Grundkörpers (12) mittels eines Schlag-, Schmiede- oder Prägewerkzeugs Zähne (30) eingedrückt werden und in einem zweiten Arbeitsgang eine gegenüberliegende, zweite Seite des Grundkörpers (12) wenigstens im Bereich der Zähne (30) geschliffen wird.

2. Verfahren nach Anspruch 1, dadurch gekennzeichnet, daß die schleifebene unter einem geringen Winkel zu der zweiten Seite (26) verläuft.

3. Verfahren nach Anspruch 1 oder 2, dadurch gekennzeichnet, daß der Grundkörper (12) und die Zähne (30) in einem einzigen Arbeitsgang mit einem Werkzeug aus einer Blechvorlage gestanzt oder geschmiedet werden.

4. Verfahren nach einem oder mehreren der vorherigen Ansprüche, dadurch gekennzeichnet, daß zwei Schleifvorrichtungen in zwei geneigt zueinander verlaufenden Ebenen wirken und in einem Schleifvorgang zwei Seitenschneidenbereiche (14l, 14r) bearbeiten.

5. Trennleiste, hergestellt nach dem Verfahren gemäß einem oder mehreren der vorherigen Ansprüche, bei der die Zähne (30) rechtwinklig zu einer von diesen gebildeten Schneide verlaufen.

6. Trennleiste, hergestellt nach dem Verfahren gemäß einem oder mehreren der vorherigen Ansprüche, bei der die Zähne (30) unter einem spitzen oder einem stumpfen Winkel zu einer von diesen gebildeten Schneide verlaufen.

7. Trennleiste nach Anspruch 5 oder 6, die in zwei Seitenschneidenbereichen (14l, 14r) mit Zähnen (30) versehen ist.

8. Trennleiste nach einem oder mehreren der vorherigen Ansprüche, die in zwei Seitenschneidenbereichen (14l, 14r) und einem Stirnschneidenbereich (16) mit Zähnen (30) versehen ist.

9. Trennleiste nach einem oder mehreren der vorherigen Ansprüche, deren Zähne (30) mittig zwischen der ersten und der zweiten Seite (24, 26) auslaufen.

10. Häckselvorrichtung mit Trennleisten nach einem oder mehreren der vorherigen Ansprüche 5 bis 9, insbesondere Strohhäcksler an einem Mähdrescher.

11. Häckselvorrichtung nach Anspruch 9, mit einem Rotor und einem Stator, wobei der Rotor mit mittig geschliffenen und der Stator mit einseitig geschliffenen Trennleisten (10) bestückt ist oder umgekehrt.
